# EUROPÄISCHE PATENTSCHRIFT

(11) **EP 0 719 167 B1**
(45) Veröffentlichungstag und Bekanntmachung des Hinweises auf die Patenterteilung: **28.05.1997**
(21) Anmeldenummer: 94927567.1
(22) Anmeldetag: 06.09.1994
(51) Int. Cl.: B01D 19/04, C08G 63/664, C11D 3/00

(54) **ESTERGRUPPENHALTIGE BLOCKPOLYMERE ALS ENTSCHÄUMER FÜR WÄSSRIGE SYSTEME**
ESTER GROUP-CONTAINING BLOCK POLYMERS SUITABLE AS ANTI-FOAMING AGENTS FOR AQUEOUS SYSTEMS
POLYMERES SEQUENCES CONTENANT DES GROUPES ESTERS, UTILES COMME AGENTS ANTI-MOUSSE POUR SYSTEMES AQUEUX

(30) Priorität: 15.09.1993 DE 4331228
(43) Veröffentlichungstag der Anmeldung: 03.07.1996
(73) Patentinhaber: Henkel Kommanditgesellschaft auf Aktien, 40191 Düsseldorf (DE)
(72) Erfinder: MÖLLER, Thomas, D-40593 Düsseldorf (DE); EICKEN, Ulrich, D-41352 Korschenbroich (DE); FISCHER, Herbert, D-40229 Düsseldorf (DE); WOLLENWEBER, Horst-W., D-40597 Düsseldorf (DE); GRESS, Wolfgang, D-42111 Wuppertal (DE); DE HAUT, Christian, F-77310 Boissise-le-Roi (FR); MAHLER, Ulrike, CH-5034 Suhr (CH); GORZINSKI, Manfred, D-40227 Düsseldorf (DE); SLADEK, Hans-Jürgen, D-47800 Krefeld (DE)
(86) Internationale Anmeldenummer: EP9402966
(87) Internationale Veröffentlichungsnummer: WO9507742

(56) Entgegenhaltungen:
- EP-A- 0 036 597
- EP-A- 0 117 538
- WO-A-92/10266
- WO-A-92/11073
- WO-A-93/15257
- WO-A-93/19150
- MACROMLECULES, Bd.26, Nr.18, 30. August 1993, WASHINGTON Seiten 4845 - 4853, XP000389712 E.J. TIJSMA, L. VAN DER DOES, A. BANTJES, N.K. DE VRIES, I. VULIC, G.H. WERUMEUS BUNING 'POLY(ETHER ESTER)S FROM PIVALOLACTONE, ALKANENOLS, AND DIMETHYL TEREPHTHALATE. 1. SYNTHESIS, STRUCTURE ANALYSIS, AND REACTION MECHANISM'

## Beschreibung

Die Erfindung betrifft die Verwendung von Blockpolymeren, welche Ethylenglykolether-Einheiten verestert mit gegebenenfalls polymeren Hydroxycarbonsäuren enthalten, als Schaumregulatoren in wäßrigen, ohne diesen Zusatz zum Schäumen neigenden Systemen, schütt- und rieselfähige, partikelförmige Schauminhibierungsmittel, die derartigen Schaumregulator an wasserlösliches oder wasserdispergierbares Trägermaterial adsorbiert enthalten, sowie Verfahren zur Herstellung derartiger Schaumregulatoren als auch derartiger partikelförmiger Schauminhibierungsmittel.

Terephthalsäure-Polythylenglykolester und deren Verwendung als Schmutzlösekomponente in Waschmitteln sind aus der europäischen Patentschrift EP 185 427 bekannt. In der europäischen Patentanmeldung EP 429 307 werden wasserlösliche Blockcopolymere beschrieben, die aus Carbonsäure- und Polyalkylenoxid-Monomeren aufgebaut sind und biologisch zumindest anteilsweise abgebaut werde können. Derartige Blockcopolymere werden dort als Waschmittelbuilder oder Inkrustationsinhibitoren verwendet. Polyester aus zwei- oder mehrbasigen Carbonsäuren und mehrwertigen Alkoholen sowie nichtionischen Tensiden sind aus der europäischen Patentanmeldung EP 442 191 bekannt. Diese Verbindungen werden dort als vergrauungsinhibierende und schmutzablösungsfördernde Zusätze in Waschmitteln eingesetzt.

Aus der europäischen Patentschrift EP 000 424 sind Ester-Ether-Blockcopolymere bekannt, die sich von Diolen und komplexen Monohydroxymonocarbonsäuren ableiten. Die komplexen Monohydroxymonocarbonsäuren sind das Veresterungsprodukt einer oder mehrerer Monohydroxymonocarbonsäuren mit einer hydroxylgruppenfreien Monocarbonsäure. Als Diole kommen Ethylenglykol, Propylenglykol und Butylenglykol zum Einsatz. Derartige Ester-Ether-Blockcopolymere werden dort als oberflächenaktive Substanzen, als Schneidöle oder Hydrauliköle verwendet. Die schaumregulierende Eigenschaft dieser oder strukturell ähnlicher Verbindungen ist nicht erkannt worden und nicht erwähnt.

Auch aus der deutschen Offenlegungsschrift DT 24 30 342 sind intermolekulare Veresterungsprodukte von Hydroxyalkansäuren, die mit einer hydroxylgruppenfreien Carbonsäure und einem Olefinoxid umgesetzt werden, bekannt. Dort werden derartige Verbindungen als Textilschmiermittel, anstistatische Mittel und Dispergierhilfsmittel für die Öl-in-Wasser Dispergierung eingesetzt. Nicht erwähnt ist der Einsatz dieser oder strukturell ähnlicher Verbindungen als Schaumregulatoren.

Saure Polyglykolester von Dicarbonsäuren und ihre Herstellung sind in der US-amerikanischen Patentschrift US 2 950 310 beschrieben. Diese Substanzen besitzen emulsionsbrechende Eigenschaften bei Wasser-in-Öl-Emulsionen und können im Rahmen der Erdölraffination eingesetzt werden.

Aus der internationalen Anmeldung WO 92/11074 sind Entschäumer auf Basis von Carbonsäurederivaten, beispielsweise Ester und Amide von Zitronensäure, Weinsäure, Bernsteinsäure, Maleinsäure und Ethylendiamintetraessigsäure bekannt. Diese Entschäumer können direkt oder emulgiert in Wasser bei der Papierherstellung als auch bei der Papierbeschichtung eingesetzt werden.

Die schauminhibierende Wirkung von Kohlensäureestern bestimmter veretherter Alkohole ist aus der internationalen Patentanmeldung WO 92/11073 bekannt. Dort werden derartige Substanzen als Entschäumer in der Nahrungsmittelindustrie sowie bei Fermentationsprozessen eingesetzt. Aus der deutschen Auslegeschrift 12 42 569 ist die Verwendung von Alkyl- oder Alkoxyalkylcarbonaten mit 4 bis 22 C-Atomen pro Alkyl- beziehungsweise Alkoxyalkylrest als schaumdämpfende Mittel bekannt. Dort sind jedoch Verbindungen aus verzweigtkettigen Alkoholen untersucht worden, die eine in neuerer Zeit als verbesserungsbedürftig empfundene biologische Abbaubarkeit aufweisen.

Bei der industriellen Herstellung oder Verarbeitung von Nahrungsmitteln kommt der Bekämpfung und Verhütung von auftretendem Schaum beträchtliche Bedeutung zu. So können beispielsweise bei der industriellen Verarbeitung zuckerhaltiger Pflanzensäfte, wie sie im großen Maßstab bei der Gewinnung von Zucker aus Rüben erfolgt, besondere Schwierigkeiten durch übermäßige Schaumentwicklung in der Saftgewinnung, -reinigung und in den Verdampfern auftreten. Die in der Zuckerindustrie einzusetzenden Schaumbekämpfungsmittel müssen selbstverständlich physiologisch unbedenklich sein. Dasselbe gilt für Schaumbekämpfungsmittel, die bei der Herstellung von Kartoffelfertigprodukten wie Kartoffelchips oder Pommes Frites oder aber auch bei der Erzeugung von Backhefe unter Verwendung von Melasse eingesetzt werden. Zusätzlich müssen die Schaumbekämpfungsmittel in der kartoffelverarbeitenden Industrie dazu in der Lage sein, den schwer zu bekämpfenden Stärkeschaum zu regulierung. Insgesamt erwartet der Praktiker zudem stets Schaumbekämpfungsmittel, die in kleinen Anwendungsmengen hohe Spontan- und Langzeitwirkung haben.

Für die Entschäumung in der Zucker- und Hefeindustrie sind seit langem Fette und Öle wie Rüb-, Erdnuß-, Olivenöle sowie Wollfett in Gebrauch. Auch synthetische Ester wie Fettsäuremomoglyceride, Fettsäurepolyglykolester und synthetische Alkohole wie Polyalkylenglykole und Alkylenoxidaddukte an Fettalkohole sind für diesen Zweck vorgeschlagen worden. Obgleich mit diesen Verbindungen eine gewisse Schaumunterdrückung erreicht werden kann, ist jedoch häufig die notwendige Einsatzmenge zu hoch beziehungsweise die Wirksamkeit nur bei bestimmten Temperaturen gegeben.

Bei Lacken und Farben kann durch Homogenisieren der Lack- beziehungsweise Farbbestandteile Luft eingerührt werden. Dies ist besonders nachteilig, da entweder sehr lange vom Anwender gewartet werden muß, bis diese Luftbläschen zerplatzt sind, bevor er mit dem Lack- beziehungsweise Farbaufstrich beginnen kann oder der Lack- beziehungsweise Farbaufstrich zeigt Bläschen. Derartige Aufstriche mit Oberflächenstörungen sind nicht nur optisch unschön, sondern auch weniger haltbar, da getrocknete Bläschen zu leichtem Abblättern der Filme führen. Um sowohl für den Homogenisiervorgang als auch für den Auftrag die störenden Luftbläschen zu vermeiden, werden am effektivsten Schaumbekämpfungsmittel auf Basis von Silikonen zugesetzt. Obgleich mit diesen Schaumbekämpfungsmitteln die Luftblasen hervorragend zerstört werden können, haben sie den großen Nachteil, daß der Farb- beziehungsweise Lackaufstrich auf den verschiedenen zu bestreichenden Untergründen, beispielsweise Glas, ungleich ist. Vermutlich bewirken die stark hydrophoben Silikone keine gute gleichmäßige Benetzung des zu beschichtenden Untergrunds.

Auch in der Papierfabrikation können aufgrund hohen Luftgehaltes im Wasserkreislauf bei Papiermaschinen Schäume gebildet werden, die zu Störungen führen. So können Schaumflecken auf dem Papier auftreten, wenn Schaum mit flotiertem Schmutz bei der Blattbildung auf die Papierbahn gelangt. Da bei der Papierherstellung auch immer höhere Arbeitsgeschwindigkeiten der Maschinen angewendet werden, steigt die Gefahr der Untermischung von Luft in die Fasersupension. Die untergemischte Luft stört in Form von Luftblasen den Entwässerungsvorgang des Papierstoffes auf der Papiermaschine und führt zu einer porösen Struktur des Papierblattes. Diese Nachteile werden durch die neuen Papiermaschinen verstärkt, da nun die Wasserkreisläufe immer häufiger geschlossen sind. Durch die geschlossenen Systeme reichern sich schaumbildende und schaumstabilisierende Stoffe an. Außerdem kann sich die Temperatur des im Kreise geführten Wassers der Papiermaschine im Laufe der Produktion ändern. Daher werden auch bei der Papierherstellung Entschäumer benötigt, die in weiten Temperaturbereichen in geringen Mengen lang wirksam sind.

Ebenso ist in wäßrigen Reinigungsflotten, wie sie bei der üblichen Waschbehandlung in Waschmaschinen, beispielsweise im gewerblichen Bereich, aber insbesondere in Haushaltstrommelwaschmaschinen, auftreten, die Regulierung der Schaumentwicklung unerläßlich, da sowohl zu starkes Schäumen als auch das völlige Fehlen von Schaum dem gewünschten Wascherfolg nicht zuträglich ist. Es fehlt daher auch nicht an Vorschlägen zur Lösung des Problems der übermäßigen Schaumentwicklung von Waschmitteln. Bisher sind die Silikon-Entschäumungsmittel, die aus in der Regel flüssigen Polysiloxanen mit Alkyl- oder Arylsubstituenten und feinteiliger Kieselsäure bestehen, bezogen auf die benötigte Einsatzmenge, als wirksamste Schaumregulatoren bekannt geworden. Polysiloxane sind jedoch bei bekannt guter Entschäumerwirkung vergleichsweise aufwendig in der Herstellung und besitzen den Nachteil, daß sie insbesondere in neuerer Zeit oft als in ihrer biologischen Abbaubarkeit nicht völlig befriedigend empfunden werden. Auch silikonfreie Schaumregulierungsmittel für Waschmittelflotten sind bekannt. So wird zum Beispiel in der europäischen Patentschrift EP 87 233 ein Verfahren zur Herstellung eines schwachschäumenden Waschmittels beschrieben, bei dem Gemische aus einer öligen beziehungsweise wachsartigen Substanz und Bisamiden auf ein Trägerpulver, insbesondere ein sprühgetrocknetes tensidhaltiges Waschmittel aufgetragen werden. Die ölige beziehungsweise wachsartige Substanz kann zum Beispiel aus Vaseline mit einem Schmelzpunkt von 20 °C bis 120 °C bestehen. Bei dieser Art der Konfektionierung, nämlich dem Aufsprühen des Mittels auf das sprühgetrocknete, tensidhaltige Waschmittel besteht die Gefahr, daß sich das Herstellungsverfahren nachteilig auf die Lagerbeständigkeit der Schaumregulierungskomponente auswirkt mit dem Ergebnis, daß deren Aktivität mit zunehmender Lagerzeit abnimmt. Um ihre Wirkung zu steigern und gleichzeitig die erforderliche Anwendungskonzentration herabzusetzen, werden diesen Entschäumern häufig weitere Schauminhibitoren zugesetzt, insbesondere die bekannten Polysiloxane oder Polysiloxan-Kieselsäure-Gemische. Weitere schaumregulierte Waschmittel sind aus den europäischen Patentschriften EP 75 433 und EP 94 250 bekannt. Dort beschriebene Schaumregulierungsmittel enthalten jedoch ebenfalls Silikone und kommen aus den genannten Gründen nicht in Betracht. Aus der deutschen Offenlegungsschrift DT 28 57 155 sind Waschmittel mit einem Schaumregulierungsmittel bekannt, das hydrophobes Siliziumdioxid und ein Gemisch aus festen und flüssigen Kohlenwasserstoffen, gegebenenfalls im Gemisch mit Fettsäureestern, enthält. Durch den hohen Gehalt an bei Raumtemperatur flüssigem Kohlenwasserstoff von 22,5 Gew.-% bis etwa 98 Gew.-% besteht bei derartigen Schaumregulierungsmitteln die Gefahr des Verklumpens. Aus der deutschen Offenlegungsschrift DE 34 00 008 sind Schaumregulierungsmittel, enthaltend Paraffinwachsgemische und hydrophobierte Kieselsäure, gegebenenfalls in Kombination mit verzweigtkettigen Alkoholen, bekannt. Pulverförmige Entschäumer, die ein flüssiges Gemisch aus höhermolekularen, verzweigtkettigen Alkoholen mit hydrophobierter Kieselsäure in Kombination mit einem wasserunlöslichen Wachs an einem wasserlöslichen, pulverförmigen Träger enthalten, sind aus der deutschen Offenlegungsschrift DE 31 15 644 bekannt. In der europäischen Patentanmeldung EP 309 931 wurden Schaumregulierungsmittel beschrieben, welche ein relativ aufwendiges Gemisch aus Paraffinwachs und mikrokristallinem Paraffinwachs enthalten.

Alle derartigen Mittel weisen bei der in neuerer Zeit immer mehr Bedeutung gewinnenden maschinellen Wäsche im Niedrigtemperaturbereich in manchen Fällen eine als unzureichend empfundene Entschäumerleistung auf und lassen sich nicht immer befriedigend lagerstabil in Wasch- oder Reinigungsmittel einarbeiten. Zudem ist bei den genannten Verbindungen nicht immer eine vollauf zufriedenstellende biologische Abbaubarkeit gewährleistet.

Die Aufgabe bestand demnach in der Bereitstellung eines möglichst universell in zum Schäumen neigenden wäßrigen Systemen einsetzbaren Schaumregulators, der in geringen Mengen eine gute Spontanwirkung zeigt und diese Wirkung möglichst lange behält. Zudem sollte er so maßgeschneidert werden können, daß er schon bei niedrigen Temperaturen wirksam ist und dennoch über einen weiten Temperaturbereich seine Wirkung entfaltet. Überdies sollte er sich in Form eines rieselfähigen Schaumregulierungsmittels konfektionieren lassen und auch in fertig konfektionierten Wasch- und Reinigungsmitteln eingesetzt über einen breiten Temperaturbereich wirksam sein, das heißt im Fall von Waschmitteln im Kaltwaschbereich, bei mittleren Waschtemperaturen und auch im Kochwaschbereich eine störende Schaumentwicklung unterdrücken. Weiterhin soll sowohl der Schaumregulator als auch das diesen enthaltende Schaumregulierungsmittel im Gemisch mit sonstigen üblichen Bestandteilen der zu entschäumenden wäßrigen Systeme lager- und wirkungsstabil bleiben und keine nachteiligen Auswirkungen auf das Behandlungsgut und die Umwelt ausüben. Zum Einsatz in der Farben- und Lackindustrie sollten die Schaumregulatoren nicht nur eine gute Entschäumerwirkung haben, sondern auch einen homogenen Lack- oder Farbanstrich ermöglichen. Dies gilt insbesondere auch für das Papiercoating, für das ein homogener gleichmäßiger Farbstrich möglichst ohne Oberflächenstörung notwendig ist.

Überraschenderweise wurde nun gefunden, daß diese Aufgabe durch bestimmte Blockpolymere aus hydrophilen Polyethylenglykoletherblöcken, die mit hydrophoberen Blöcken, welche aus gegebenenfalls polymeren Hydroxycarbonsäuren gebildet werden, über Esterbindungen verknüpft sind, gelöst werden kann.

Gegenstand der Erfindung ist somit die Verwendung von estergruppenhaltigen Blockpolymeren der allgemeinen Formel I,

A-(CH₂CH₂O)ₙ-B (I)

in der n eine Zahl von 4 bis 300, insbeondere 5 bis 250, A einen gegebenenfalls polymeren Hydroxycarbonsäurerest und B Wasserstoff, einen Alkyl- oder Alkenylrest mit 1 bis 22 C-Atomen, insbesondere 1 bis 8 C-Atomen, einen Phenyl- oder Benzylrest oder A bedeutet, als Schaumregulatoren für wäßrige, zum Schäumen neigende Systeme.

Vorzugsweise entspricht das Blockpolymer der allgemeinen Formel II,

R¹(-O-R-CO)ₐ-(OCH₂CH₂)ₙ-(O-OC-R)_{b}-OR² (II)

in welcher der Ethoxylierungsgrad n die für Formel I angegebene Bedeutung besitzt und insbesondere eine Zahl von 6 bis 100 ist, R ein linearer oder verzweigtkettigter Alkylen- oder Alkenylenrest mit 1 bis 43 C-Atomen, insbesondere mit 2 bis 18 C-Atomen ist, a eine Zahl von 1 bis 550, insbesondere von 2 bis 170 und b eine Zahl von 0 bis 550, insbesondere von 1 bis 170, R¹ und R² unabhängig voneinander Wasserstoff oder eine Acylgruppierung R³CO-, in der R³ Wasserstoff oder ein Alkyl- oder Alkenylrest mit 1 bis 21 C-Atomen ist, bedeutet. Unter diesen sind besonders bevorzugt solche Verbindungen, die durch Umsetzung von monomeren Hydroxycarbonsäuren mit Polyethylenglykol im Gewichtsverhältnis von 60:40 bis 99:1, insbesondere von 80:20 bis 98:2 erhältlich sind. Dabei weist das Polyethylenglykol vorzugsweise ein Molekulargewicht von 300 bis 1000 auf.

Ein weiterer Gegenstand der Erfindung ist ein körniges, rieselfähiges Schaumregulierungsmittel, das 0,5 Gew.-% bis 30 Gew.-% eines erfindungsgemäß zu verwendenden Blockcopolymeren adsorbiert an 70 Gew.-% bis 99,5 Gew.-% eines körnigen, im wesentlichen anorganischen phosphatfreien Trägermaterials enthält.

Bei den erfindungsgemäß zu verwendenden Blockpolymeren handelt es sich um Substanzen mit Estergruppen, die durch Umsetzung von Polyethylenglykolen mit Hydroxycarbonsäuren erhältlich sind. Vorzugsweise handelt es sich um solche Verbindungen, die durch Umsetzung von 2 bis 1500, insbesondere 2,5 bis 200 Molequivalenten monomerer Hydroxycarbonsäure mit 1 Molequivalent Polyethylenglykol erhältlich sind. Dabei weist Polyethylenglykol vorzugsweise ein Molekulargewicht von 300 bis 1000 auf.

Zu den geeigneten Hydroxycarbonsäuren gehören die w-Hydroxycarbonsäuren mit 2 bis 44 C-Atomen, die beispielsweise durch selektive Reduktion entsprechender Dicarbonsäuren bzw. -derivaten erhältlich sind, welche auch ein- oder mehrfach ungesättigt sein können. Langkettige Dicarbonsäuren sind in bekannter Weise durch Dimerisierung von Monocarbonsäuren, insbesondere Fettsäuren, zugänglich. Beispiele für derartige w-Hydroxycarbonsäuren sind neben Glykolsäure 10-Hydroxydecansäure, 11-Hydroxyundecansäure und 12-Hydroxydodecansäure. Auch verzweigtkettige Hydroxycarbonsäuren im genannten C-Kettenbereich sind geeignet. Unter diesen sind Milchsäure und Ricinolsäure (12-Hydroxyoctadec-9-ensäure in allen stereoisomeren Formen) und die aus dieser durch Hydrierung zugängliche 12-Hydroxystearinsäure besonders bevorzugt.

Die Herstellung der erfindungsgemäß zu verwendenden Blockpolymere ist bekannt (EP-A-0 117 538, WO-A-93/15257, macromolecules, Bd 26, Nr. 18, Seiten 4845 - 4853, 1993) und kann durch veresternde Umsetzung von Polyethylenglykol einer Molmasse im Bereich von 200 bis 8000 mit einer Hydroxycarbonsäure beziehungsweise einem reaktiven Hydroxycarbonsäurederivat, insbesondere einem Lakton beziehungsweise sonstigen cyclischen Ester oder Verbindungen gemäß Formel III,

H(-O-R-CO)ₐ-X (III)

in der R ein linearer oder verzweigtkettigter Alkylen- oder Alkenylenrest mit 1 bis 43 C-Atomen ist, a eine Zahl von 1 bis 550, insbesondere 1, und X OH, OR⁴ oder Cl bedeutet, wobei R⁴ für einen Alkylrest mit 1 bis 8 C-Atomen, insbesondere eine Methyl- oder Ethylgruppe steht, gewünschtenfalls unter Zusatz von Veresterungskatalysatoren, bei Temperaturen von 20 °C bis 220 °C, insbesondere 100 °C bis 200 °C und gewünschtenfalls in einem unter den Reaktionsbedingungen inerten Lösungsmittel, erfolgen. Dabei werden Polyethylenglykol und gegebenenfalls polymere Hydroxycarbonsäure beziehungsweise reaktives Hydroxycarbonsäurederivat vorzugsweise in Molverhältnissen von 1:2 bis 1:1500, insbesondere von 1:2,5 bis 1:200 eingesetzt. Um Verbindungen gemäß Formel II zu erhalten, in denen R¹ bzw. R² nicht Wasserstoff sind, kann anschließend mit einer hydroxylgruppenfreien Carbonsäure bzw. derem reaktiven Derivat umgesetzt werden, was zu entsprechend mit Estergruppen endverschlossenen Produkten gemäß Formel II führt. Bei der Herstellung letztgenannter Verbindungen ist auch ein einstufiges Verfahren möglich, bei dem anteilsweise hydroxylgruppenfreie Carbonsäure bzw. -derivat gleichzeitig mit der Hydroxycarbonsäure eingesetzt wird.

Die erfindungsgemäß zu verwendenden Blockcopolymere sind flüssig bis hochviskose Produkte, die in Einzelfällen auch schon als fest zu bezeichnen sind. Bei Zugabe der Blockpolymere zu schaumbildenden Systemen tritt bereits in Gegenwart sehr geringer Mengen eine starke Minderung der Schaumbildung ein. Dabei sind die Blockpolymere sowohl geeignet, bereits auftretenden Schaum zu mindern als auch präventiv Schaumbildung zu vermeiden sowie als Entlüfer zu wirken. Die Blockpolymere können pur oder auch in Lösung beziehungsweise Dispersion den Systemen zugesetzt werden. Sofern man Lösungen beziehungsweise Dispersionen einsetzen will, kann ein flüssiges, organisches Medium, beispielsweise ein Alkohol, Ester oder Methylenchlorid verwendet werden. Man kann aber auch Wasser als Lösemittel nehmen. Sofern die Blockpolymere hohe Gehalte an Polyethylenglykolen aufweisen, sind sie selbstemulgierbar in Wasser, das heißt ohne Zugabe von externen Emulgatoren können sie in Wasser emulgiert beziehungsweise dispergiert werden. Sofern jedoch der hydrophobe Anteil in den Blockpolymeren überwiegt, ist es hier notwendig, entweder andere Lösemittel zu verwenden oder externe Emulgatoren einzusetzen. Ob die Blockpolymere selbstemulgierbar sind oder nicht, ist durch leichte Handversuche festzustellen, indem man die Substanzen mit Nasser versetzt und unter Rühren versucht zu emulgieren beziehungsweise dispergieren.

Die Blockpolymere können in der Papierindustrie bei der Zellstoffherstellung, beispielsweise bei der Sulfitzellstoffkochung, bei der Papiererzeugung und auch beim Papierstreichen (Papierbeschichten) eingesetzt werden. Des weiteren sind die Blockpolymere verwendbar in der Nahrungsmittelindustrie, bei der Nahrungsmittelerzeugung und Verarbeitung, beispielsweise in der Zuckerindustrie bei der Rübenschwemme und beim Waschen und Schnitzeln der Zuckerrüben, bei der Extraktion des Zuckers aus den Rübenschnitzeln und der nachfolgenden Behandlung mit Kalkmilch als auch bei den mehrstufigen Verdampfern, in denen so lange Nasser entzogen wird, bis ein mit Zucker übersättigter Kristallbrei, die Füllmasse, entsteht. Ebenso können die Blockpolymere in der Hefeindustrie bei der technischen Herstellung von Backhefe durch Fermentation verwendet werden. Hier tritt vor allem bei der aeroben Gärungsstufe sehr viel Schaum auf, der mit den Blockpolymeren verhindert bzw. reduziert werden kann. Des weiteren können die Blockpolymere auch in der Kartoffelverarbeitung eingesetzt werden, da sie mit dem schwer zu bekämpfenden Stärkeschaum fertig werden. Auch in der Lack- und Farbenindustrie können Blockpolymere ohne Probleme zugesetzt werden, das heißt vor allen Dingen, ohne daß sie ansonsten die Qualität der Lacke oder Farben in irgendeiner Weise beeinträchtigen und dennoch insgesamt den Schaum, der insbesondere durch Eintrag durch Luft entsteht, zerstören. Die Einsatzmenge an Blockpolymeren variiert nach dem jeweiligen Einsatzgebiet. Prinzipiell ist man bemüht, möglichst geringe Mengen zusetzen zu mössen, alleine schon aus ökonomischen Gründen. In der Regel liegt die Einsatzmenge an den Blockpolymeren im Bereich von 10 bis 10.000 ppm.

Die erfindungsgemäße Verwendung kann in ihrer einfachsten Form dadurch erreicht werden, daß ein oben beschriebenes Blockpolymer einer ohne diesen Zusatz zu unerwünscht starkem Schäumen neigenden wäßrigen System in Substanz, gelöst in einem vorzugsweise wasssermischbaren organischen Lösungsmittel oder in wäßriger Suspension beziehungsweise Dispersion zugesetzt wird. Zu den zum Schäumen neigenden wäßrigen Systemen, die mit Hilfe der erfindungsgemäßzu verwendenden Blockpolymere entschäumt beziehungsweise schaumreguliert werden können, gehören neben den oben genannten auch wäßrige Wasch- oder Reinigungsmittelflotten, Textilfärb- oder -vorbehandlungsbäder, Pulpen für die Zellstoff- oder Papierherstellung sowie zuckerhaltige Pflanzensäfte, wie sie in der Nahrungsmittelindustrie bei der Melassebeziehungsweise Zuckerrübenverarbeitung anfallen.

In einer bevorzugten Ausführungsform werden die erfindungsgemäß zu verwendenden Blockpolymere in Form von körnigen, rieselfähigen Schaumregulierungsmitteln, welche die genannten Blockpolymere enthalten, verwendet.

Dies ist insbesondere dann zweckmäßig, wenn die Blockpolymere festen beziehungsweise teilchenförmigen Mitteln zugesetzt werden sollen.

Das phosphatfreie Trägermaterial zur Konfektionierung der erfindungsgemäß zu verwendenden Blockpolymere zu einem rieselfähigen, insbesondere für den Einsatz in pulverförmigen Wasch- und Reinigungsmitteln geeigneten Schaumregulierungsmittel weist eine körnige Struktur auf und besteht aus wasserlöslichen oder wasserdispergierbaren Verbindungen, in erster Linie aus anorganischen und gegebenenfalls zusätzlichen organischen Salzen, die für den Einsatz in Wasch- und Reinigungsmitteln geeignet sind. In Frage kommen neben üblichen Neutralsalzen, beispielsweise Alkalisulfaten oder Alkalichloriden, insbesondere übliche Waschalkalien, beispielsweise Alkalicarbonate oder -silikate, anorganische Buildersubstanzen, beispielsweise Alumosilikate, Schichtsilikate, beispielsweise Bentonite, und anorganische Bleichmittel auf Sauerstoffbasis, beispielsweise Alkaliperborate oder - percarbonate, wobei insbesondere die letztgenannten Bleichmittel in einer Ausführungsform des erfindungsgemäßen Schaumregulierungsmittels als Trägermaterial beziehungsweise Bestandteil des Trägermaterials bevorzugt sind. Gemische aus anorganischen und organischen Salzen können vielfach mit Vorteil verwendet werden, wobei organische Trägermaterialien vorzugsweise nicht über 20 Gew.-%, insbesondere in Mengen von 2 Gew.-% bis 15 Gew.-%, jeweils bezogen auf gesamtes Trägermaterial, in diesem enthalten sind. In einer weiteren Ausführungsform des erfindungsgemäßen Schaumregulierungsmittels enthält das Trägermaterial vorzugsweise sowohl Alkalicarbonat als auch Alkalisilikat. In diesem Fall enthält das Trägermaterial vorzugsweise 1 Gew.-% bis 50 Gew.-% Alkalicarbonat, bis zu 70 Gew.-% Alkalisulfat, bis zu 50 Gew.-% Alkalialumosilikat und 10 Gew.-% bis 50 Gew.-% Alkalisilikat, kann jedoch zusätzlich weitere wasserlösliche oder wasserunlösliche, wasserdispergierbare Stoffe enthalten. Zu den zusätzlich verwendbaren Materialien gehören insbesondere Alkalichloride und Schichtsilikate, beispielsweise Bentonit. Bei dem Alkalisilikat handelt es sich vorzugsweise um eine Verbindung mit einem Molverhältnis Alkalioxid zu SiO₂ von 1:1,5 bis 1:3,5. Die Verwendung derartiger Silikate resultiert in besonders guten Korneigenschaften, insbesondere hoher Abriebsstabilität und dennoch hoher Auflösungsgeschwindigkeit in Wasser. Zu den im Trägermaterial für die erfindungsgemäßen Schaumregulierungsmittel brauchbaren Alumosilikaten gehören insbesondere die Zeolithe, beispielsweise Zeolith NaA und NaX. Als organische Komponenten des Trägermaterials kommen zum Beispiel Stärke, Acetate, Tartrate, Citrate, Succinate, Carboxymethylsuccinate sowie die Alkalisalze von Aminopolycarbonsäuren, wie NTA oder EDTA, Hydroxyalkanphosphonate und Aminoalkanpolyphosphonate in Frage, wie 1-Hydroxyethan-1,1-diphosphonat, Ethylendiaminotetramethylenphosphonat und Diethylentriaminpentamethylenphosphonat. Brauchbar sind ferner wasserlösliche Salze von polymeren beziehungsweise copolymeren Carbonsäuren, beispielsweise Polyacrylate und Mischpolymerisate aus Acrylsäure und Maleinsäure. Bevorzugtes Alkalimetall in den genannten Alkalisalzen ist dabei in allen Fällen Natrium.

Das Trägermaterial kann darüberhinaus als organische Komponente filmbildende Polymere, beispielsweise Polyethylenglykole, Polyvinalalkohole, Polyvinylpyrrolidone und Cellulosederivate, enthalten. Brauchbare Celluloseether sind insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Vorzugsweise werden Mischungen aus Natrium-Carboxymethylcellulose und Methylcellulose eingesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können.

Die erfindungsgemäßen Schaumregulierungsmittel können, vorzugsweise nicht mehr als 10 Gew.-% und insbesondere von 0,5 Gew.-% bis 3,5 Gew.-%, Tensid enthalten. Unter Tensiden sind oberflächenaktive Verbindungen mit hydrophobem Molekülteil und hydrophilen anionischen, ampholytischen, zwitterionischen, kationischen und nichtionischen Gruppen zu verstehen, die in wäßriger Lösung oder Dispersion eine reinigende beziehungsweise emulgierende Wirkung entfalten. Tenside sind normalerweise die schaumverursachenden Bestandteile von Wasch- und Reinigungsflotten. Um so mehr muß überraschen, daß diese schäumenden Bestandteile in den erfindungsgemäßen Schaumregulierungsmitteln enthalten sein können, ohne daß die Wirksamkeit der Mittel beeinträchtigt wird. Der hydrophobe Molekülteil von Tensiden besteht im allgemeinen aus einem Kohlenwasserstoffrest beziehungsweise einem substituierten Kohlenwasserstoffrest oder einem in Wasser schwer löslichen Polyglykoletherrest, zum Beispiel einem Polypropylenglykol- beziehungsweise Polybutylenglykol-Etherrest. Vorzugsweise enthalten die erfindungsgemäßen Schaumregulierungsmittel synthetische anionische Tenside vom Sulfat- oder Sulfonat-Typ, insbesondere Alkylbenzolsulfonate und/oder Alkylsulfate, weil diese im Rahmen der anschließend beschriebenen Herstellung der Schaumregulierungsmittel über wäßrige Dispersionen der Blockcopolymere eine besonders gute Dispergierung der Blockcopolymere ermöglichen. Dabei sind Tensidgehalte von bis zu 30 Gew.-%, insbesondere von 5 Gew.-% bis 10 Gew.-%, jeweils bezogen auf erfindungsgemäß zu verwendendes Blockcopolymer, bevorzugt.

Die Herstellung eines erfindungsgemäßen Schaumregulierungsmittels kann durch Aufbringen des flüssigen, gegebenenfalls auf über Raumtemperatur erwärmten Blockpolymeren auf das körnige Trägermaterial erfolgen, beispielsweise durch sukzessives Zumischen, insbesondere als Spray, zu dem Trägermaterial. Dabei ist sowohl der separate Einsatz von oben genannten einzelnen Trägermaterial-Bestandteilen möglich als auch von zuvor aus diesen erzeugten Trägerkörnern. Das Trägerkorn, welches in üblicher Weise durch Granulation oder durch Sprühtrocknen einer wäßrigen Aufschlämmung der Trägermaterialien erzeugt werden kann, wird dabei durch Mischorgane oder durch Fluidisierung in Bewegung gehalten, um eine gleichmäßige Beladung des Trägermaterials zu gewährleisten. Die dafür verwendeten Sprühmischer können kontinuierlich oder diskontinuierlich betrieben werden.

Im Rahmen des beschriebenen Herstellungsverfahrens für ein erfindungsgemäßes Schaumregulierungsmittel wie auch zur erfindungsgemäßen Verwendung der Blockpolymere ist auch der Einsatz einer wäßrigen Dispersion des erfindungsgemäß zu verwendenden Blockpolymers möglich. Dabei ist von besonderem Vorteil, daß die erfindungsgemäß zu verwendenden Blockpolymere in der Regel selbstemulgierend sind. Gewünschtenfalls kann ein oben aufgeführtes filmbildendes Polymer und/oder Tensid als Dispergierhilfsmittel eingesetzt werden. Bei der Herstellung von körnigen Schaumregulierungsmitteln kann je nach Wassergehalt der Dispersion und Wasserbindevermögen des verwendeten Trägermaterials diese Vorgehensweise die anschließende Trocknung, beispielsweise mittels üblicher Wirbelschichttrockner, des entstehenden Schaumregulierungsmittels notwendig machen.

Die Herstellung des Schaumregulierungsmittels erfolgt in einer weiteren erfindungsgemäßen Ausgestaltung derart, daß man die Trägermaterialien in Wasser löst beziehungsweise aufschlämmt, das erfindungsgemäß zu verwendende Blockcopolymer darin dispergiert und diesen Slurry anschließend sprühtrocknet. Der Dispersion kann gewünschtenfalls ein wasserlöslicher Dispersionsstabilisator in Form eines Tensids und/oder in Wasser quellfähigen Polymeren zugesetzt werden. Beispiele für brauchbare in Wasser quellfähige Polymere sind die genannten Celluloseether, Homo- und Copolymere von ungesättigten Carbonsäuren, wie Acrylsäure, Maleinsäure und copolymerisierbaren Vinylverbindungen, wie Vinylether, Acrylamid und Ethylen. Der Zusatz an derartigen als Dispersionsstabilisatoren wirkenden Verbindungen in der wäßrigen Aufschlämmung beträgt vorzugsweise nicht über 5 Gew.-%, insbesondere 1 Gew.-% bis 3 Gew.-%, bezogen auf das entstehende Schaumregulierungsmittel. Der Wassergehalt des Slurries kann je nach Art beziehungsweise Löslichkeit des Trägermaterials 30 Gew.-% bis 60 Gew.-% betragen. Das Sprühtrocknen der Dispersion kann in im Prinzip bekannter Weise in dafür vorgesehenen Anlagen, sogenannten Sprühtürmen, mittels heißer, in Gleichstrom oder Gegenstrom geführter Trocknungsgase erfolgen.

Ein erfindungsgemäßes Schaumregulierungsmittel besteht vorzugsweise aus Partikeln mit Korngrößen nicht über 2 mm, insbesondere von 0,1 mm bis 1,6 mm. Es weist vorzugsweise ein Schüttgewicht im Bereich von 300 Gramm pro Liter bis 1100 Gramm pro Liter, insbesondere von 450 Gramm pro Liter bis 900 Gramm pro Liter auf. Vorzugsweise wird es zur Herstellung von pulverförmigen Wasch- oder Reinigungsmitteln verwendet, wobei als weiterer Vorteil der erfindungsgemäßen Schaumregulierungsmittel ihre gering notwendige Einsatzmenge bei guter Entschäumerleistung zu bemerken ist.

### Beispiele

### Beispiel 1: Herstellung der Blockpolymere

Polyethylenglykol (PEG) und Ricinolsäure beziehungsweise 12-Hydroxystearinsäure in den in der nachfolgenden Tabelle 1 angegebenen Gewichtsverhältnissen sowie ein Katalysator (0,1 Gew.-% Zinndiocatanoat) wurden in siedendem Xylol unter azeotroper Entfernung des Reaktionswassers bis zum Verschwinden der Säurezahl miteinander umgesetzt und das Xylol anschließend im Vakuum abgezogen. Man erhielt die blockpolymeren Ester **E1** und **E2** als hochviskose farblose Flüssigkeiten.

**Tabelle 1**

| | PEG-1000^{a)} | RS^{b)} | HSS^{c)} |
|---|---|---|---|
| **E1** | 90 | 10 | - |
| **E2** | 90 | - | 10 |

| | | | |
|---|---|---|---|
| a) mittleres Molgewicht 1000 | | | |
| b) Ricinolsäure | | | |
| c) 12-Hydroxystearinsäure | | | |

### Beispiel 2

Zur Bestimmung der Entschäumerleistung von Blockpolymeren gemäß Beispiel 1 wurden in ein Schraubdeckelglas mit 500 ml Fassungsvermögen 250 g einer 10 gew.-%igen wäßrigen Lösung von Zuckerrübenkraut und 200 Microliter einer 10 gew.-%igen von Blockpolymeren in Isopropanol gegeben. Als Vergleich wurde stets eine Mischung mit einem Poylglycerinpartialester mit Ethylen- und Propylenoxid-Einheiten (V) angesetzt. Beide Mischungen wurden im Glas parallel manuell 20 Mal geschüttelt. Danach bestimme man die Zeit, die notwendig war, bis der Schaumberg sich zu einer Schaumoberfläche reduzierte, in die ein Loch (Ø ca. 5 cm) gerissen war. Je kürzer die in Tabelle 2 angegebene Zeit, desto besser die entschäumende Wirkung.

**Tabelle 2**

| Schaumabbauzeiten | |
|---|---|
| Blockpolymer | Zeit [s] |
| **E1** | 25 |
| **E2** | 25 |
| **V** | > 3600 |

### Beispiel 3

Durch einfaches Vermischen von jeweils 1 Gew.-% Teil der Blockpolymeren **E1** oder **E2** aus Beispiel 1 mit jeweils 10 Gew.-% Teilen pulverförmigem Natriumsulfat wurden körnige Schaumregulierungsmittel erhalten. Diese wurde in schauminhibitorfreie Universalwaschmittelrezepturen eingearbeitet und zeigten unter Anwendungsbedingungen in einer haushaltsüblichen Waschmaschine bei Konzentrationen von 1 Gew.-% bis 4 Gew.-%, bezogen auf gesamtes Waschmittel, Entschäumerleistungen, die denen eines handelsüblichen Silikon-Schauminhibitors (gewichtsgleich bezogen auf Aktivsubstanz eingesetzt) in keinem Fall nachstanden.

## Patentansprüche

1. Verwendung von estergruppenhaltigen Blockcopolymeren der allgemeinen Formel I
A-(CH₂CH₂O)ₙ-B (I)
in der n eine Zahl von 4 bis 300, A einen gegebenenfalls polymeren Hydroxycarbonsäurerest und B Wasserstoff, einen Alkyl- oder Alkenylrest mit 1 bis 22 C-Atomen, insbesondere 1 bis 8 C-Atomen, einen Phenyl- oder Benzylrest oder A bedeutet, als Schaumregulatoren für wäßrige, zum Schäumen neigende Systeme.

2. Verwendung nach Anspruch 1, dadurch gekennzeichnet, daß das Blockpolymer der allgemeinen Formel II
R¹(-O-R-CO)ₐ-(OCH₂CH₂)ₙ-(O-OC-R)_{b}-OR² (II)
entspricht, in welcher der Ethoxylierungsgrad n die für Formel I angegebene Bedeutung besitzt, R ein linearer oder verzweigtkettigter Alkylen- oder Alkenylenrest mit 1 bis 43 C-Atomen ist, a eine Zahl von 1 bis 550, b eine Zahl von 0 bis 550, R¹ und R² unabhängig voneinander Wasserstoff oder eine Acylgruppierung R³CO-, in der R³ Wasserstoff oder ein Alkyl- oder Alkenylrest mit 1 bis 21 C-Atomen ist, bedeutet.

3. Verwendung nach Anspruch 1 oder 2, dadurch gekennzeichnet, daß das Blockpolymer eine Verbindung gemäß Formel II ist, in der n eine Zahl von 6 bis 100, R ein linearer oder verzweigtkettigter Alkylen- oder Alkenylenrest mit 2 bis 18 C-Atomen ist, a eine Zahl von 2 bis 170, b eine Zahl von 1 bis 170 und/oder R¹ und R² unabhängig voneinander Wasserstoff bedeutet.

4. Verwendung nach einem der Ansprüche 1 bis 3, dadurch gekennzeichnet, daß das Blockpolymer Ricinolsäure- und/oder 12-Hydroxystearinsäureeinheiten enthält.

5. Verwendung nach einem der Ansprüche 1 bis 4, dadurch gekennzeichnet, daß das zum Schäumen neigende wäßrige System bei der Herstellung oder Weiterverarbeitung von Nahrungsmitteln oder bei Fermentationsprozessen auftritt.

6. Verwendung nach einem der Ansprüche 1 bis 4, dadurch gekennzeichnet, daß das zum Schäumen neigende wäßrige System bei der Herstellung oder Weiterverarbeitung von Lacken, Farben und/oder Kunststoffen auftritt.

7. Verwendung nach einem der Ansprüche 1 bis 4, dadurch gekennzeichnet, daß das zum Schäumen neigende wäßrige System eine tensidhaltige Wasch- oder Reinigungsflotte ist.

8. Verwendung nach einem der Ansprüche 1 bis 4, dadurch gekennzeichnet, daß das zum Schäumen neigende wäßrige System ein wäßriges Textilfärb- oder -vorbehandlungsbad ist.

9. Körniges, rieselfähiges Schaumregulierungsmittel, das 0,5 Gew.-% bis 30 Gew.-% eines estergruppenhaltigen Blockcopolymeren der allgemeinen Formel I,
A-(CH₂CH₂O)ₙ-B (I)
in der n eine Zahl von 4 bis 300, A einen gegebenenfalls polymeren Hydroxycarbonsäurerest und B Wasserstoff, einen Alkyl- oder Alkenylrest mit 1 bis 22 C-Atomen, einen Phenyl- oder Benzylrest oder A bedeutet, adsorbiert an 70 Gew.-% bis 99,5 Gew.-% eines körnigen, im wesentlichen anorganischen phosphatfreien Trägermaterials enthält.

10. Mittel nach Anspruch 9, dadurch gekennzeichnet, daß es 1 Gew.-% bis 25 Gew.-%, insbesondere 2 Gew.-% bis 12 Gew.-% Blockcopolymer und 75 Gew.-% bis 99 Gew.-%, insbesondere 88 Gew.-% bis 98 Gew.-% Trägermaterial enthält.

11. Mittel nach Anspruch 9 oder 10, dadurch gekennzeichnet, daß das Trägermaterial Waschalkalien, insbesondere Alkalicarbonat und/oder Alkalisilikat, Buildersubstanzen, insbesondere Alumosilikat, Schichtsilikat, insbesondere Bentonit, und/oder anorganisches Bleichmittel auf Sauerstoffbasis, insbesondere Alkaliperborat oder -percarbonat, enthält.

12. Verfahren zur Herstellung eines körnigen Schaumregulierungsmittels gemäß einem der Ansprüche 9 bis 11, dadurch gekennzeichnet, daß man, gewünschtenfalls bei Temperaturen oberhalb von Raumtemparatur, das Blockpolymer auf das in Bewegung gehaltene körnige Trägermaterial aufbringt.

13. Verfahren nach Anspruch 12, dadurch gekennzeichnet, daß man eine gewünschtenfalls unter Verwendung eines Dispergierhilfsmittels hergestellte wäßrige Suspension beziehungsweise Dispersion des Blockpolymeren einsetzt und das entstehende Schaumregulierungsmittel gegebenenfalls einem anschließenden Trocknungsschritt unterwirft.

14. Verfahren zur Herstellung eines körnigen Schaumregulierungsmittels gemäß einem der Ansprüche 9 bis 11, dadurch gekennzeichnet, daß man in einer wäßrigen Lösung oder Aufschlämmung des Trägermaterials das Blockcopolymer, gegebenenfalls unter Zusatz eines Dispergierhilfsmittels, insbesondere eines in Wasser löslichen beziehungsweise quellfähigen Polymeren, dispergiert und die Dispersion sprühtrocknet.

15. Verwendung eines körnigen Schaumregulierungsmittels gemäß einem der Ansprüche 9 bis 11 zur Herstellung von pulverförmigen Wasch- oder Reinigungsmitteln.

## Claims

1. The use of block copolymers containing ester groups corresponding to general formula (I):
A-(CH₂CH₂O)ₙ-B (I)
in which n is an integer of 4 to 300, A is an optionally polymeric hydroxycarboxylic acid unit and B is hydrogen, an alkyl or alkenyl radical containing 1 to 22 carbon atoms, more particularly 1 to 8 carbon atoms, a phenyl or benzyl radical or has the same meaning as A, as foam regulators for water-based systems with a tendency to foam.

2. The use claimed in claim 1, characterized in that the block polymer corresponds to general formula (II):
R¹(-O-R-CO)ₐ-(OCH₂CH₂)ₙ-(O-OC-R)_{b}-OR² (II)
in which the degree of ethoxylation n has the meaning defined for formula I, R is a linear or branched alkylene or alkenylene radical containing 1 to 43 carbon atoms, a is a number of 1 to 550, b is a number of 0 to 550 and R¹ and R² independently of one another represent hydrogen or an acyl group R³CO-, where R³ is hydrogen or an alkyl or alkenyl radical containing 1 to 21 carbon atoms.

3. The use claimed in claim 1 or 2, characterized in that the block polymer is a compound corresponding to formula (II), in which n is a number of 6 to 100, R is a linear or branched alkylene or alkenylene radical containing 2 to 18 carbon atoms, a is a number of 2 to 170, b is a number of 1 to 170 and/or R¹ and R² independently of one another represent hydrogen.

4. The use claimed in any of claims 1 to 3, characterized in that the block polymer contains ricinoleic acid and/or 12-hydroxystearic acid units.

5. The use claimed in any of claims 1 to 4, characterized in that the water-containing system with a tendency to foam occurs in the production or further processing of foods or in fermentation processes.

6. The use claimed in any of claims 1 to 4, characterized in that the water-containing system with a tendency to foam occurs in the production or further processing of paints, lacquers and/or plastics.

7. The use claimed in any of claims 1 to 4, characterized in that the water-containing system with a tendency to foam is a surfactant-containing wash liquor or cleaning solution.

8. The use claimed in any of claims 1 to 4, characterized in that the water-containing system with a tendency to foam is a water-containing textile dyeing or pretreatment bath.

9. A granular free-flowing foam regulating formulation containing 0.5% by weight to 30% by weight of a block copolymer containing ester groups corresponding to general formula (I):
A-(CH₂CH₂O)ₙ-B (I)
in which n is an integer of 4 to 300, A is an optionally polymeric hydroxycarboxylic acid unit and B is hydrogen, an alkyl or alkenyl radical containing 1 to 22 carbon atoms, a phenyl or benzyl radical or has the same meaning as A,
adsorbed onto 70% by weight to 99.5% by weight of a granular, substantially inorganic phosphate-free support material.

10. A foam regulating formulation as claimed in claim 9, characterized in that it contains 1% by weight to 25% by weight and, more particularly, 2% by weight to 12% by weight of block copolymer and 75% by weight to 99% by weight and, more particularly, 88% by weight to 98% by weight of support material.

11. A foam regulating formulation as claimed in claim 9 or 10, characterized in that the support material contains washing alkalis, more particularly alkali metal carbonate and/or alkali metal silicate, builders, more particularly alumosilicate, layer silicate, more particularly bentonite, and/or an oxygen-based inorganic bleaching agent, more particularly alkali metal perborate or percarbonate.

12. A process for the production of the granular foam regulating formulation claimed in any of claims 9 to 11, characterized in that the block polymer is applied to the granular support material kept in motion, if desired at temperatures above room temperature.

13. A process as claimed in claim 12, characterized in that an aqueous suspension or dispersion of the block polymer prepared optionally using a dispersion aid is used and the foam regulating formulation obtained is optionally subjected to a subsequent drying step.

14. A process for the production of the granular foam regulating formulation claimed in any of claims 9 to 11, characterized in that the block copolymer is dispersed in an aqueous solution or slurry of the support material, optionally with addition of a dispersion aid, more particularly a water-soluble or water-swellable polymer, and the dispersion is spray-dried.

15. The use of the granular foam regulating formulation claimed in any of claims 9 to 11 for the production of powder-form detergents or cleaning compositions.

## Revendications

1. Utilisation de copolymères séquencés contenant des groupes esters, répondant à la formule générale I
A-(CH₂CH₂O)ₙ-B (I)
dans laquelle n représente un nombre de 4 à 300, A représente un radical d'acide hydroxycarboxylique éventuellement polymère et B représente un atome d'hydrogène, un radical alkyle ou un radical alcényle contenant de 1 à 22 atomes de carbone, en particulier de 1 à 8 atomes de carbone, un radical phényle ou un radical benzyle ou encore A, comme régulateurs de mousse pour des systèmes aqueux manifestant une tendance à former de la mousse.

2. Utilisation selon la revendication 1, caractérisée en ce que le polymère séquencé répond à la formule générale II
R¹-(O-R-CO)ₐ-(OCH₂CH₂)ₙ-(O-OC-R)_{b}-OR² (I)
dans laquelle le degré d'éthoxylation n possède la signification indiquée pour la formule I, R représente un radical alkylène ou alcénylène à chaîne droite ou ramifiée contenant de 1 à 43 atomes de carbone, a représente un nombre de 1 à 550, b représente un nombre de 0 à 550, R¹ et R² représentent, indépendamment l'un de l'autre, un atome d'hydrogène ou un groupement acyle R³CO- dans lequel R³ représente un atome d'hydrogène ou un radical alkyle ou alcényle contenant de 1 à 21 atomes de carbone.

3. Utilisation selon la revendication 1 ou 2, caractérisée en ce que le polymère séquencé représente un compose selon la formule II dans laquelle n représente un nombre de 6 à 100, R représente un radical alkylène ou alcénylène à chaîne droite ou ramifiée contenant de 2 à 18 atomes de carbone, a représente un nombre de 2 à 170, b représente un nombre de 1 à 170 et/ou R¹ et R² représentent, indépendamment l'un de l'autre, un atome d'hydrogène.

4. Utilisation selon l'une quelconque des revendications 1 à 3, caractérisée en ce que le polymère séquencé contient des unités d'acide ricinoléique et/ou d'acide 12-hydroxystéarique.

5. Utilisation selon l'une quelconque des revendications 1 à 4, caractérisée en ce que le système aqueux manifestant une tendance à former de la mousse apparaît lors de la préparation ou du traitement ultérieur de produits alimentaires ou encore dans des processus de fermentation.

6. Utilisation selon l'une quelconque des revendications 1 à 4, caractérisée en ce que le système aqueux manifestant une tendance à former de la mousse apparaît lors de la préparation ou du traitement ultérieur de laques, de vernis, de peintures et/ou de substances synthétiques.

7. Utilisation selon l'une quelconque des revendications 1 à 4, caractérisée en ce que le système aqueux manifestant une tendance à former de la mousse est un bain de lavage ou de détergent contenant des agents tensioactifs.

8. Utilisation selon l'une quelconque des revendications 1 à 4, caractérisée en ce que le système aqueux manifestant une tendance à former de la mousse est un bain aqueux de teinture ou de prétraitement des textiles.

9. Agent de régulation de la mousse granuleux apte à l'écoulement, qui contient, à concurrence de 0,5% en poids à 30% en poids, un copolymère séquencé contenant des groupes esters répondant à la formule générale I
A-(CH₂CH₂O)ₙ-B (I)
dans laquelle n représente un nombre de 4 à 300, A représente un radical d'acide hydroxycarboxylique éventuellement polymère et B représente un atome d'hydrogène, un radical alkyle ou un radical alcényle contenant de 1 à 22 atomes de carbone, un radical phényle ou un radical benzyle ou encore A, adsorbé, à concurrence de 70% en poids à 99,5% en poids, sur une matière de support granuleuse exempte de phosphates essentiellement inorganique.

10. Agent selon la revendication 9, caractérisé en ce qu'il contient, à concurrence de 1% en poids à 25% en poids, en particulier à concurrence de 2% en poids à 12% en poids, un copolymère séquencé et, à concurrence de 75% en poids à 99% en poids, en particulier à concurrence de 88% en poids à 98% en poids, une matière de support.

11. Agent selon la revendication 9 ou 10, caractérisé en ce que la matière de support contient des alcalis de lavage, en particulier des carbonates alcalins et/ou des silicates alcalins, des adjuvants de lavage, en particulier des aluminosilicates, des silicates stratifiés, en particulier la bentonite et/ou des agents de blanchiment inorganiques à base d'oxygène, en particulier des perborates alcalins ou des percarbonates alcalins.

12. Procédé pour la préparation d'un agent granuleux de régulation de la mousse selon l'une quelconque des revendications 9 à 11, caractérisé en ce qu'on applique, si on le souhaite à des températures supérieures à la température ambiante, le copolymère séquencé sur la matière de support granuleuse maintenue en mouvement.

13. Procédé selon la revendication 12, caractérisé en ce qu'on met en oeuvre une suspension, respectivement une dispersion aqueuse du polymère séquencé préparée, si on le souhaite, en utilisant un adjuvant de mise en dispersion et on soumet l'agent obtenu de régulation de la mousse le cas échéant à une étape ultérieure de séchage.

14. Procédé pour la préparation d'un agent granuleux de régulation de la mousse selon l'une quelconque des revendications 9 à 11, caractérisé en ce qu'on disperse dans une solution ou dans une suspension aqueuse de la matière de support, le copolymère séquencé le cas échéant en ajoutant un adjuvant de mise en dispersion, en particulier un polymère soluble, respectivement apte à gonfler dans l'eau, et on sèche la dispersion par pulvérisation.

15. Utilisation d'un agent granuleux de régulation de la mousse selon l'une quelconque des revendications 9 a 11 pour la préparation d'agents de lavage ou de détergents pulvérulents.
